# EUROPEAN PATENT SPECIFICATION

(11) **EP 3 817 333 B1**
(45) Date of publication and mention of the grant of the patent: **08.03.2023**
(21) Application number: 19903200.4
(22) Date of filing: 06.11.2019
(51) Int. Cl.: H04L 9/00, H04L 9/40, G06Q 30/00, G06Q 40/00, H04L 9/32, H04L 67/104, G06Q 20/02, G06Q 30/06

(54) **METHOD AND SYSTEM FOR PROCESSING REQUESTS IN A CONSORTIUM BLOCKCHAIN**
VERFAHREN UND SYSTEM ZUR BEARBEITUNG VON ANFRAGEN IN EINER KONSORTIAL-BLOCKCHAIN
MÉTHODE ET SYSTÈME DE TRAITEMENT DES DEMANDES DANS UNE BLOCKCHAIN DE CONSORTIUM

(30) Priority: 28.12.2018 CN 201811626391
(43) Date of publication of application: 05.05.2021
(73) Proprietor: Advanced New Technologies Co., Ltd., George Town, Grand Cayman KY1-9008 (KY)
(72) Inventor: YANG, Xinying, Hangzhou, Zhejiang 310000 (CN)
(74) Representative: Goddar, Heinz J.
(86) International application number: PCT/CN2019/115856
(87) International publication number: WO 2020/134616

(56) References cited:
- CN-A- 106 452 785
- CN-A- 107 077 674
- CN-A- 107 948 283
- CN-A- 108 681 900
- CN-A- 108 681 900
- CN-A- 110 022 345
- CN-A- 110 046 901
- CN-A- 110 049 087
- US-A1- 2016 316 003
- US-A1- 2018 101 560

## Description

### Technical Field

Examples of the present specification relate to information technology, and in particular to methods, systems, apparatuses, and devices for processing a request in a consortium blockchain.

### Background

In a consortium blockchain, nodes often vary significantly in functions. For example, a consortium blockchain for copyright recording can include a work publishing node, a copyright registration node, a copyright assignment node, and a notarization node, and so on. However, based on various user needs, a user usually is connected to only one of the nodes which can be considered as a connected node of the user. For different nodes, the quantity of users connected to the nodes are different. Some nodes have more connected users, some nodes have less connected users.

In some service scenarios, for example, when, for example, a client device intends to verify credibility of a consortium blockchain, a user in the consortium blockchain needs to send a service request to other (non-connected) nodes. In this case, it can often cause a node having more users to send a request to a node having less users, resulting in imbalance in processing requests by nodes in the consortium blockchain.

In view of the above, solutions for processing requests in the consortium blockchain are needed.
CN 108681900 A discloses a method and system for light node verification of transactions, based on blockchain technology, where light nodes can perform transaction verification using data acquired from full nodes in a height-increasing manner and asynchronously over all nodes so as to help the nodes reduce the pressure of verifying transactions.

### Summary

The invention is defined by the independent claims. Preferred embodiments of the invention are recited by the dependent claims. In view of the problem of unbalanced request processing in the existing consortium blockchain, in order to achieve more balanced processing of requests in each node of the consortium blockchain, the examples of the present specification provide a request processing solutions in the consortium blockchain. In a first aspect of the solution, methods for processing a request in a consortium blockchain are provided. After generating a service on a client device and recording the service on the blockchain through a connected node, the method includes:
sending, by the client device, a request to a plurality of nodes in the consortium blockchain, wherein the request includes a service location query request and/or a simple payment verification SPV request, and the request includes a digest hash of the service;
receiving, by any node, the request, and determining, by the current node, whether the client device is a user of the current node or a user of another node;
in response to determining that the client device is a user of another node, determining, by the current node, a first processing quantity of times for which the current node has processed requests from users of another node, and a second processing quantity of times for which other nodes have processed requests from users of the current node;
performing, by the current node, processing on the request based on the first processing quantity of times and the second processing numbers of times, wherein the processing includes: deferring processing the request sent by the client device, or transferring the request to other nodes for processing; and
verifying, by the client device, credibility of the consortium blockchain that includes information on the service based on consistency of request results returned by the plurality of nodes.

In a second aspect, the examples of the present specification also provide a method for verifying credibility of a consortium blockchain. After a service is generated by a user and the service is recorded on the blockchain through a connected node, the method includes:
obtaining addresses of a plurality of nodes in the consortium blockchain to send a request;
before sending the request, for any node of the plurality of nodes, determining whether a quantity of times requests sent to the node has reached a threshold, and in response to determining that the quantity of times has reached the threshold, deferring sending the request to the node;
receiving request results returned from the addresses of the plurality of nodes;
verifying credibility of the consortium blockchain based on consistency of the request results;
wherein the request includes a service location query request or a simple payment verification SPV request, and the request includes a digest hash of a target service.

In a third aspect, the examples of the present specification also provide a method for processing a request in the consortium blockchain. After a service is generated by a user and the service is recorded on the blockchain through a connected node, the method includes:
receiving a request sent by a client device, wherein the request includes a service location query request or a simple payment verification SPV request, and the request includes a digest hash of a target service;
determining whether the client device is a user of the current node or a user of another node;
in response to determining that the client device is a user of another node, determining a first processing quantity of times for which the current node has processed requests from users of another node, and a second processing quantity of times for which other nodes have processed requests from users of the current node;
performing processing on the request based on the first processing quantity of times and the second processing numbers of times, wherein the processing includes: deferring processing the request sent by the client device, or transferring the request to other nodes for processing.

Corresponding to the first aspect, the examples of the present specification also provide a system for processing a request in a consortium blockchain. After generating a service on a client device and recording the service on the blockchain through a connected node, the system includes:
sending, by the client device, a request to a plurality of nodes in the consortium blockchain, wherein the request includes a service location query request and/or a simple payment verification SPV request, and the request includes a digest hash of the service;
receiving, by a node, the request, and determining whether the client device is a user of the current node or a user of another node;
in response to determining that the client device is a user of another node, determining a first processing quantity of times for which the current node has processed requests from users of another node, and a second processing quantity of times for which other nodes have processed requests from users of the current node;
performing processing on the request based on the first processing quantity of times and the second processing numbers of times, wherein the processing includes: deferring processing the request sent by the client device, or transferring the request to other nodes for processing; and
the client device verifying credibility of the consortium blockchain that includes information on the service based on consistency of request results returned by the plurality of nodes.

Corresponding to the second aspect, the examples of the present specification also provide an apparatus for verifying credibility of a consortium blockchain. After a service is generated by a user and the service is recorded on the blockchain through a connected node, the apparatus includes:
an obtaining module configured to obtain addresses of a plurality of nodes in the consortium blockchain to send a request;
a determination module configured to, before sending the request, for any one of the plurality nodes, determine whether a quantity of times requests sent to the node has reached a threshold, and in response to determining that the quantity of times has reached the threshold, defer sending the request to the node;
a receiving module configured to receive request results returned from the addresses of the plurality of nodes; and
a verification module configured to verify credibility of the consortium blockchain based on consistency of the request results;
wherein the request includes a service location query request or a simple payment verification SPV request, and the request includes a digest hash of a target service.

Corresponding to the third aspect, the examples of the present specification also provide an apparatus for processing a request in the consortium blockchain, located on a node in the consortium blockchain. After a service is generated by a user and the service is recorded on the blockchain through a connected node, the apparatus includes:
a receiving module configure to receive a request sent by a client device, wherein the request includes a service location query request or a simple payment verification SPV request, and the request includes a digest hash of a target service;
an identity determination module configure to determine whether the client device is a user of the current node or a user of another node;
a quantity of processing times determination module configure to, in response to determining that the client device is a user of another node, determine a first processing quantity of times for which the current node has processed requests from users of another node, and a second processing quantity of times for which other nodes have processed requests from users of the current node;
a determination module configure to perform processing on the request based on the first processing quantity of times and the second processing numbers of times, wherein the processing includes: deferring processing the request sent by the client device, or transferring the request to other nodes for processing; and
a sending module configure to send the request processing result to the client device.

In the solutions according to the examples of the present specification, in a scenario where a client device intends to send a service request to other nodes in a consortium blockchain, by calculating based on a first processing quantity of times for which the current node has processed user requests from other nodes, and a second processing quantity of times for which other nodes have processed user requests from the current node, a determining result is obtained as whether to defer processing the request or to transfer the request to other nodes. As such, more balanced processing can be achieved among nodes in the consortium blockchain.

It should be understood that the above-mentioned general descriptions and the below detailed descriptions are merely illustrative and explanatory, and are not intended to limit examples of the present specification.

In addition, any of the examples of the present specification does not need to achieve all the above-mentioned effects.

### Brief Description of the Drawings

In order to more clearly describe the technical solutions in some examples of the present specification or the existing technology, the following will briefly introduce the drawings that need be used in the description of the examples or the existing technology. Clearly, in the following description, the drawings are only some of the examples described in the present specification. For those ordinary skilled in the art, other drawings can be obtained based on these drawings.
FIG. 1 is a schematic diagram illustrating an architecture involved in the current consortium blockchain.
FIG. 2 is a schematic flowchart illustrating a method for processing a request in a consortium blockchain in a system aspect according to the examples of the present specification.
FIG. 3 is a schematic flowchart illustrating a method for verifying credibility of a consortium blockchain on a client device according to the examples of the present specification.
FIG. 4 is a schematic flowchart illustrating a method for processing a request in a consortium blockchain according to the examples of the present specification.
FIG. 5 is a schematic block diagram illustrating an apparatus for verifying credibility of a consortium blockchain according to the examples of the present specification.
FIG. 6 is a schematic block diagram illustrating an apparatus for processing a request according to the examples of the present specification.
FIG. 7 is a schematic block diagram illustrating a device for configuring the method of the examples of the present specification.

### Detailed Description

In order to enable those skilled in the art to better understand the technical solutions in the examples of the present specification, the technical solutions in the examples of the present specification will be described in detail below in conjunction with the drawings in the examples of the present specification. Clearly, the described examples are only a part of the examples in the present specification, rather than all the examples. Based on the examples in the present specification, all other examples obtained by a person of ordinary skill in the art should fall within the scope of protection.

A consortium blockchain usually includes a plurality of different function nodes. At present, a consortium blockchain generally has architecture in which each function node is interfaced to its corresponding users, and a user is connected to the consortium blockchain through a function node that the user is interested in.

In the nodes in the consortium blockchain involved in the examples of the present specification, it can be considered that each node participates in the routing function of the consortium blockchain network, and can also include other functions. For example, each node can participate in the verification and broadcasting of services and block information, discover and maintain connections with peer nodes, and can also store a complete consortium blockchain locally, and some data related to the consortium blockchain.

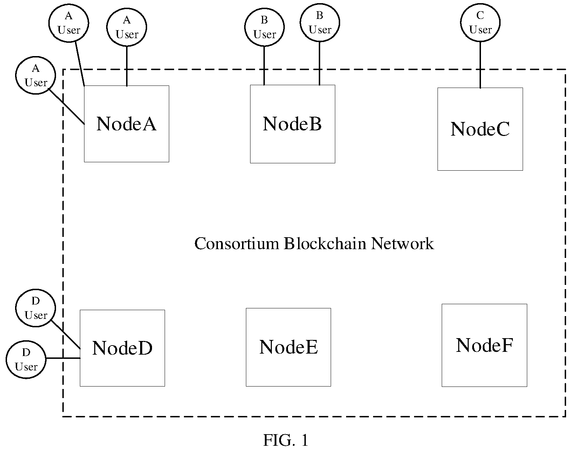

As shown in FIG. 1, FIG. 1 is a schematic diagram illustrating an architecture involved in the current consortium blockchain. In FIG. 1, the nodes in the consortium blockchain network can all include different functions, and because each node provides different functions, the target users are often not the same. In the same consortium blockchain, each function node often develops their own application programs respectively to allow users of their own to register and access. The user usually selects a node to connect to the consortium blockchain for service public and verification.

As such, the numbers of users connected to the nodes are different. Some nodes have a large number of users, such as node A in FIG. 1, and some nodes have a small number of users, such as node C in FIG. 1. However, some nodes can have no registered users at all due to the need to keep confidential to the public, such as nodes E and F in FIG. 1. In some service scenarios, when a user needs to send a request to other nodes (non-connected nodes), the processing of the requests among the nodes is unbalanced. Nodes with less registered users receive more requests than they could process. Therefore, the examples of the present specification provide methods for processing a request in the consortium blockchain to achieve balanced processing of user requests in the consortium blockchain.

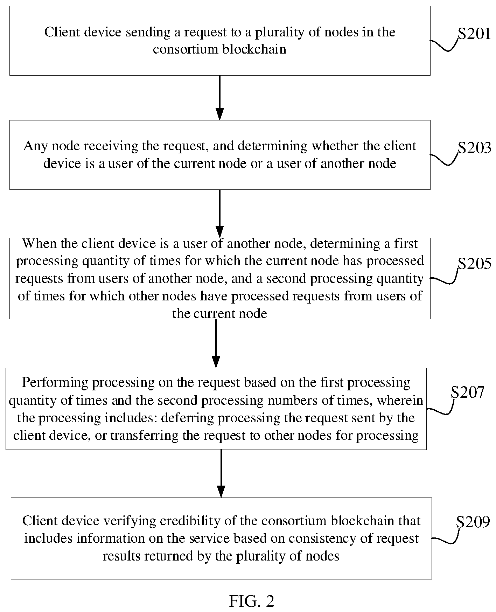

The following describes in detail the technical solutions according to the examples of the present specification with reference to the accompanying drawings. The first aspect of the solution of the examples of the present specification is shown in FIG. 2. FIG. 2 is a schematic flowchart illustrating a method for processing a request in the consortium blockchain in the system aspect of the examples of the present specification. After a service is generated on a client device, and is recorded on the blockchain, the method includes the following steps.

At S201, the client device sends a request to a plurality of nodes in the consortium blockchain, where the request includes a service location query request and/or a simple payment verification SPV request, and the request includes a digest hash of the service.

After the user completes a service and record the service on the blockchain through the connected node, the user can receive a notification message about the blockchain recording service, which generally includes a digest hash, and stores the service hash locally on the client device. Therefore, the client device can always obtain the digest hash locally and add the digest hash to a service location query request.

On the client device, upon receiving the notification message, the client device can initiate a query request according to a user instruction. It can be also that the client device can trigger a query request upon receiving the notification message.

When a user accesses the consortium blockchain through a connected node for service processing, the completion and verification of the service seems to be based on the connected node, and in turn, the user can have doubts about the credibility of the connected node and the consortium blockchain. Therefore, in this service scenario, the client device can send a location query request and/or a simple payment verification SPV request in order to verify the credibility of the consortium blockchain.

At S203, any node receives the request and determines whether the client device is a user of the current node or a user of another node.

The determining method can be confirming through a client device identifier or a user ID. In the consortium blockchain, each node can agree in advance a set of mutually recognized protocols to identify the client device or node user of each node.

For example, the client device provided by each node is marked with a sequence number, each sequence number corresponds to one node, and the sequence number is carried in the request. When any node receives the request, the node can confirm the connected user of which node the request comes from.

For another example, each node can add a header identifier to the user ID of each node when providing user registration for each node, and the user ID is carried in the request sent by the user, so that when any node receives the request, the node can parse the header of the user ID, to determine the connected user of which node the request comes from.

At S205, when the client device is a user of another node, the node determines a first processing quantity of times for which the current node has processed requests from users of another node, and a second processing quantity of times for which other nodes have processed requests from users of the current node.

If the client device is a user of the current node, the node can be processed the request directly. When the client device is a user of another node, further determination is required. Specifically, a table can be jointly maintained among the nodes of the consortium blockchain to record the quantity of requests of any other nodes that have been processed by each node, so that for any node, the node can obtain, from the table, the first processing quantity of times for which the node has processed requests from users of another node, and determine a second processing quantity of times for which other nodes have processed requests from users of the current node.

The first processing quantity of times and the second processing quantity of times can take place at intervals of a period of time, for example, daily or monthly, which can be cleared regularly, or they can be statistics of all historical data.

At S207, processing is performed on the request based on the first processing quantity of times and the second processing numbers of times, where the processing includes: deferring processing the request sent by the client device, or transferring the request to other nodes for processing.

The condition for determining whether to defer or transferring processing can be calculated based on the first processing quantity of times X and the second processing quantity of times Y to obtain a contribution value Z, to be compared with a predetermined threshold. For example, Z=(XY)/Y, or , Z=X/Y, or Z=(XY), etc. The contribution value represents a difference between a node's "self contribution" and "request to others" when processing a request. Once the contribution value exceeds a certain threshold, it means that the node has made more contributions, and the node can defer processing requests which the node receives from users of another node, or transfer requests sent by other nodes. Of course, if the predetermined contribution value condition is not satisfied, the request can still be processed locally.

Based on the principle of consortium blockchain sharing, if any user randomly selected nodes to send requests, it would be easy to understand that nodes with less registered users will receive more requests. In the architecture shown in FIG. 1, nodes E and F have a contribution ratio of infinity great since they have no registered user, followed by node C. In practical applications, nodes with less registered users generally do not need to handle large-scale services, and their processing capabilities for large traffic are generally relatively weak (such nodes can be referred to as weak nodes, such as node E, F, and C in FIG. 1). Deferring processing requests can effectively reduce the workload of weak nodes. Since in the solution of the examples of the present specification, the client device does not need to obtain the verification result immediately, the processing of the request by each node can be asynchronous, and the deferred process does not affect the client device's verification efficiency of the consortium blockchain's credibility.

When deferring or transferring a request, one possible implementation is to defer or transfer processing as long as the contribution threshold condition is satisfied. Another possible implementation is to further distinguish whether the user is a user of the current node or other nodes after the contribution threshold condition is satisfied, and defer or transfer processing the request from the user of another node.

For deferring processing, generally, a time threshold can be set to deferring processing the received request for 3 hours. Alternatively, a threshold for the processing quantity of times is determined to be 1000, if the contribution value of the node Z=(XY) exceeds the threshold, all subsequent requests can be deferred.

When a node transfers a request, in one example, the node can transfer the request randomly. At this time, when another node receives the request, the another node can still make a defer determination or request determination. In the solutions according to the examples of the present specification, in order to improve the credibility of the verification result, when the request is randomly transferred to one of the other nodes, the one of the other nodes does not include the connected node of the client device.

In another implementation, the request can also be transferred according to the above-mentioned contribution value. For example, the contribution value of each node can be determined according to the table jointly maintained among the nodes of the consortium blockchains, and the request is first transferred to a node with the smallest contribution value. It should be noted that the deferring processing or transferring request does not mean that the request is not processed. When a time limit for deferring processing is reached, the request should to be processed and the processing result should be returned to the client device.

The request involved in the examples of the present specification includes a service location query request and/or a simple payment verification SPV request, which can be used in scenarios where users verify the credibility of the consortium blockchain.

For a location query request, since a blockchain is composed of a plurality of blocks, and a block usually includes a plurality of services. Therefore, in the examples of the present specification, the location information specifically refers to which block of the blockchain the service is in when the service is recorded, and where the service is in the block. In blockchains, there can be various ways to identify different blocks, for example, by a hash value of a block header or a block height. The hash value of the block header is a hash value obtained by calculating a hash of the block header, which can be used to uniquely and specifically identify a block. In blockchains, the block height of the first block is usually 0, and the block height is increased by 1 for each additional block. A block usually has a specific block height. Therefore, the hash value of the block header or the block height can be used as part of the block metadata and stored in an independent database table in the nodes for easy indexing and faster retrieval of the block. Also, since a block usually includes a plurality of services, an address offset of each service in the block can also be used to identify the service in the block. Clearly, the address offset of each service in the same block is not the same.

Furthermore, after recording on the blockchain at the block where the service is, by maintaining a data table in a format such as: [service digest hash, hash value of the block header, address offset], or [service digest hash, block height, address offset], each node can obtain the corresponding block identifier and the address of the service in the block based on the digest hash of the service. In other words, the node can determine the location of the service in the consortium blockchain through the digest hash of the service. However, since the specific format of the blockchain can be customized, the content of the location information varies under different block formats, which does not constitute a limitation on this solution.

For SPV verification, in each block of the blockchain, all services recorded in the block are included and can be represented by a Merkle tree. All services in the block hash the data and then store the hash values to corresponding leaf nodes. Each leaf node in the tree represents a service. A leaf node in the tree indicates that there is a corresponding service in the block. In order to prove that there is a specific target service in the block, one node only has to calculate log₂N of hash values to form a Merkle path from the target service to the root of the tree. When a node performs Simplified Payment Verification (SPV), the node does not have to store all services or download the entire block. Instead, the node can just store the block headers, and verify whether the target service exists in the block through the hash of the target service and the Merkle path. In other words, the SPV result of each node is a binary result, either "yes" or "no".

At S209, the client device verifies credibility of the consortium blockchain that includes information on the service based on consistency of request results returned by the plurality of nodes.

For a location query request, since a service only has one specific location in the consortium blockchain, the credibility of the consortium blockchain can be determined based on consistency of the query results. In theory, the location information returned by each node should be exactly the same. A more strict verification method is that if all the location query results are consistent, the consortium blockchain is trustable. However, due to various reasons caused by the network, the devices or the like, some deviations can be tolerated. For example, based on all returned results, the consistency is calculated, and if no more than 95% of the returned results are same query results, the credibility of the consortium blockchain is considered to be 0; otherwise, the proportion of the same results is taken as the credibility of the consortium blockchain.

For a SPV verification request, a service either exists or does not exist in the consortium blockchain, in theory, when there is no problem with the consortium blockchain, the SPV verification results returned by the nodes should be the same. Therefore, a relatively strict way to confirm the credibility is to confirm that the consortium blockchain is trustable if all SPV verification results are "yes", otherwise it is not trustable. However, due to various reasons caused by the network, the devices or the like, some deviations can be tolerated. For example, a threshold is set, and if the consistency degree of the SPV verification result "yes" exceeds the threshold, the consortium blockchain is confirmed to be trustable.

It should be noted that the verification method based on the consistency of the location query results and the verification method based on the consistency of the SPV verification results can be performed separately at the same time. In actual operation, the verification results of the two methods are independent to each other. In other words, the client device can choose only one of the two methods or both of the methods at the same time to perform verification. When two verification methods are executed at the same time, the results of the two verification methods need to satisfy the consistency conditions at the same time to consider the consortium blockchain to be trustable. Also, during the verification process, the two programs are executed in no particular order.

Further, when the consortium blockchain is confirmed to be not trustworthy, an alarm can also be issued. Specifically, the alarm message can indicate the degree of inconsistency among the requested results of the nodes (for example, how many "yes" and "no" results respectively in the SPV results), and which nodes have results inconsistent with results of most nodes, as well as the request results of such nodes. Moreover, a credibility value can be calculated as a reference based on the degree of inconsistency of all returned results. For example, if there is identical query results of a proportion exceeding a certain threshold among the returned results, the consortium blockchain degree is considered trustable; otherwise, the consortium blockchain is considered not trustworthy.

In the solutions according to the examples of the present specification, in a scenario where a client device intends to send a service request to other nodes in a consortium blockchain, by calculating based on a first processing quantity of times for which the current node has processed user requests from other nodes, and a second processing quantity of times for which other nodes have processed user requests from the current node, a determining result is obtained as whether to defer processing the request or to transfer the request to other nodes. As such, more balanced processing can be achieved among nodes in the consortium blockchain.

In a specific implementation, the client device obtaining addresses of a plurality of nodes in the consortium blockchain can be the client device randomly obtaining addresses of a plurality of nodes in the consortium blockchain. Verification by randomly obtaining node addresses can make the verification result fairer. Also, it can also make the user's requests evenly distributed to the nodes. Alternatively, the client device obtaining addresses of a plurality of nodes in the consortium blockchain which includes addresses of the connected nodes. As such, the user can first select a batch of node addresses, and then add the addresses of the connected nodes. When performing verification by adding the connected nodes, verification result of the connected nodes can be included in the returned results, which can make the verification more targeted and can improve user experience.

In some implementations, the node can process a query request or a SPV request sent by any client device connected to the node. In other implementations, based on the principle of consortium blockchain sharing, each node can also provide a query service or an SPV service to whitelist users. The node can confirm that a user type of a client device is illegitimate or legitimate based on the whitelist, further distinguish legitimate users from others, and confirm whether the user is a user of the node or other nodes. If it is determined based on the whitelist that the client device is an illegitimate user, the request is not processed. Here, an illegitimate user can be considered as a user who has not registered, or a user whose time limit has expired, or a user with limited permissions, and so on. In other words, the node can confirm based on the whitelist that the client device sending the request is an illegitimate user, a legitimate user of the node, or a legitimate user of another node, and the node processes the request only when the client device is a legitimate user.

A specific method for determining a whitelist user includes: any node in the consortium blockchain determining a local whitelist, and broadcasting the whitelist to other nodes in the consortium blockchain, so that other nodes can determine whether to perform query processing based on the whitelist. A common processing method is that any node in the consortium blockchain confirming a user registered at the nodes as a whitelist user and broadcasting the whitelist. Other nodes can decide whether to perform further processing based on whether the client device identifier included in the request is a whitelist user. The whitelist here can use nodes as the smallest unit, or use users as the smallest unit, and the whitelist users stored by each node can be the same or different. A node only processes a request sent by a whitelist user.

For example, assume that there are four nodes A, B, C, and D in the consortium blockchain. In the above-mentioned method, nodes B, C, and D can confirm the connected users of node A as whitelist users which are jointly maintained by the four nodes. It can also include the users of node A in the whitelist users of node B, but the users of node A are not included in the whitelist users of nodes C and D. The specific situation can be determined as desired based on the service.

In a more general situation, a connected user of a node of a government agency (such as a notary office) or a public welfare organization (such as a charity) can be a whitelist user of all other nodes in the consortium blockchain, and a node user of a node's service partner node can also be a whitelist user of the node. Furthermore, each node can also classify whitelist user permission according to the user's source or historical behavior data and other factors (for example, third-party credit evaluation scores). For example, whitelist users of the lowest permission only have query permission, and whitelist users with higher permission may also have other permissions and so on.

In some implementations, when a client device selects a plurality of nodes, the client device might select the same node for a plurality of times in succession. In this case, the client device can determine whether a quantity of times requests sent to a node has reached a threshold. If the quantity of times has reached a threshold, defer sending request to the node. Counting the number of sending times can be counting the quantity of times within a period of time or counting the quantity of times in all the historical time period. With the above-mentioned method, the client device can avoid continuously requesting the same node and avoid the impact on the workload of another node.

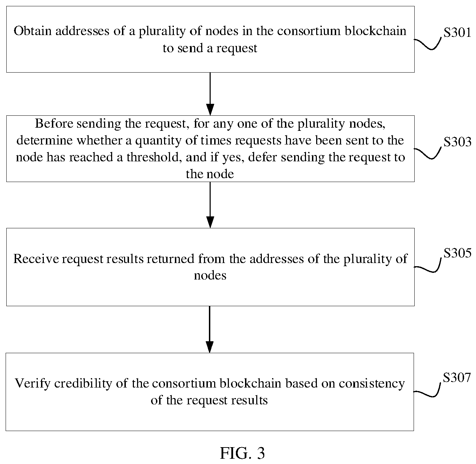

A second aspect of the solution of the examples of the present specification is shown in FIG. 3. FIG. 3 is a schematic flowchart illustrating a method for verifying credibility of a consortium blockchain on a client device according to the examples of the present specification. After a service is generated by a user and the service is recorded on the blockchain through a connected node, the method includes the following steps.

At S301, a plurality of node addresses in the consortium blockchain are obtained to send a request, where the request includes a service location query request or a simple payment verification SPV request, and the request includes a digest hash of a target service.

At S303, before sending the request, for any of the plurality of nodes, it is determined whether a quantity of times requests sent to the node reaches a threshold, and if yes, sending the request to the node is deferred.

At S305, request results returned from the addresses of the plurality of nodes are received.

At S307, credibility of the consortium blockchain is verified based on consistency of the request results.

Further, at S301 in the method, obtaining addresses of a plurality of nodes in the consortium blockchain includes randomly obtaining addresses of a plurality of nodes in the consortium blockchain; or obtaining addresses of a plurality of nodes in the consortium blockchain which include addresses of the connected nodes.

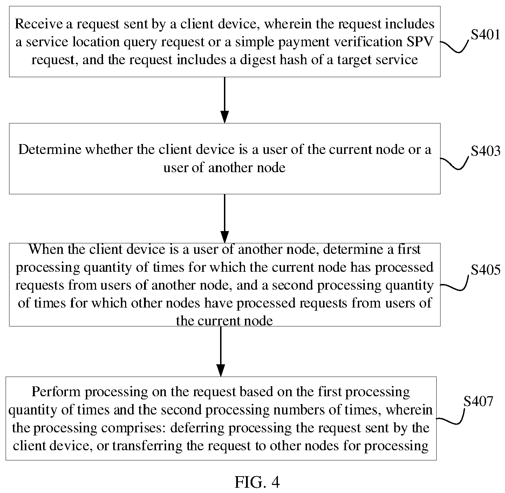

In a third aspect of the solution of the examples of the present specification is shown in FIG. 4. FIG. 4 is a schematic flowchart illustrating a method for processing a request in the consortium blockchain according to the examples of the present specification. After a service is generated by a user and the service is recorded on the blockchain through a connected node, the method includes the following steps.

At S401, a request sent by a client device is received, where the request includes a service location query request or a simple payment verification SPV request, and the request includes a digest hash of a target service.

At S403, it is determined whether the client device is a user of the current node or a user of another node.

At S405, when the client device is a user of another node, a first processing quantity of times for which the current node has processed requests from users of another node is determined, and a second processing quantity of times for which other nodes have processed requests from users of the current node is determined.

At S407, processing is performed on the request based on the first processing quantity of times and the second processing numbers of times, where the processing includes: deferring processing the request sent by the client device, or transferring the request to other nodes for processing.

Further, before receiving the request sent by the client device, the method further includes: determining a whitelist user of the current node, where the whitelist is used for determining that a user type of the client device is an illegitimate user or a legitimate user, and a legitimate user includes a user of the current node or a user of another node; and sending the whitelist to other nodes in the consortium blockchain, so that other nodes can receive and store the whitelist.

Further, the method further includes: when receiving the request, determining whether the client device is a legitimate user, and if not, the request is not processed.

Further, at step S407, transferring the request to other nodes for processing includes randomly transferring the request to one of the other nodes, and the one of the other nodes does not include the connected node of the client device.

Corresponding to the first aspect, the examples of the present specification also provide a request processing system in a consortium blockchain, including a client device and a consortium blockchain network. The consortium blockchain network includes a plurality of nodes; a service is generated on a client device, and after the service is recorded on the chain through the connected node,

the client device sends a request to the plurality of nodes in the consortium blockchain, where the request includes a service location query request and/or a simple payment verification SPV request, and the request includes a digest hash of the service.

Any node receives the request and determines whether the client device is a user of the current node or a user of another node.

When the client device is a user of another node, a first processing quantity of times for which the current node has processed requests from users of another node is determined and a second processing quantity of times for which other nodes have processed requests from users of the current node is determined.

Based on the first processing quantity of times and the second processing quantity of times, processing is performed on the request, where the processing includes: deferring processing the request sent by the client device, or transferring the request to other nodes for processing.

The client device verifies the credibility of the consortium blockchain that includes information on the service based on consistency of the request results returned by the plurality of nodes.

Further, in the system, the client device randomly obtains addresses of the plurality of nodes in the consortium blockchain, and sends a request to the plurality of nodes in the consortium blockchain; or, the client device obtains addresses of a plurality of nodes in the consortium blockchain which include addresses of the connected nodes, and sends a request to the plurality of nodes in the consortium blockchain.

Further, in the system, the node randomly transfers the request to one of the other nodes, and the one of the other nodes does not include the connected node of the client device.

Further, in the system, before the client device sends a request to the plurality of nodes in the consortium blockchain, any node determines a whitelist of users of the current node, and the whitelist is used for determining that the user type of the client device is an illegitimate user or a legitimate user, the legitimate user includes a user of the current node or users of another node; the whitelist is sent to other nodes in the consortium blockchain, for other nodes to receive and store the whitelist.

Further, in the system, before determining the first quantity of times for which the current node has processed requests from users of another node, when any node receives the request, the node determines whether the client device is a legitimate user based on the whitelist, if not, no processing is performed on the request.

Further, in the system, the client device determines whether a quantity of times requests sent to a node has reached a threshold, and if so, sending the request to the node is deferred.

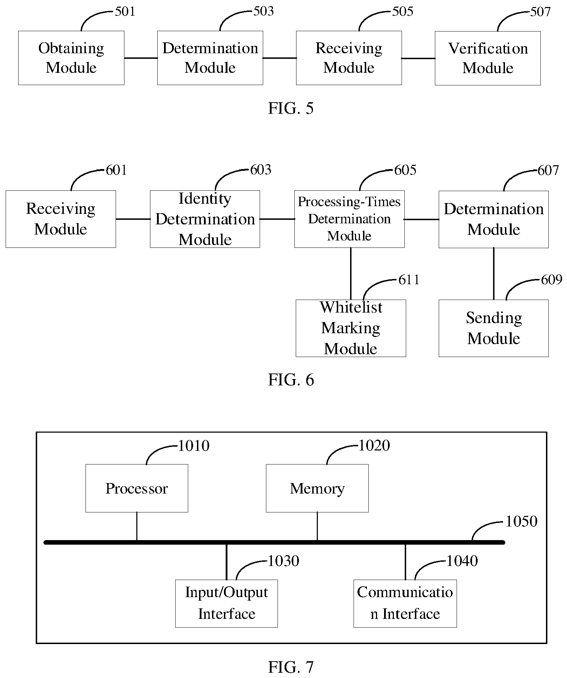

Corresponding to the second aspect, the examples of the present specification also provide an apparatus for verifying credibility of a consortium blockchain. After the user generates a service and records the service to the blockchain through the connected node, as shown in FIG. 5. As shown in FIG. 5, FIG. 5 is a schematic block diagram illustrating an apparatus for verifying credibility of a consortium blockchain according to the examples of the present specification, and the apparatus includes:
an obtaining module 501 configured to obtain addresses of a plurality of nodes in the consortium blockchain to send a request;
a determination module 503 configured to, before sending the request, for any one of the plurality nodes, determine whether a quantity of times requests sent to the node reaches a threshold, and if so, defer sending the request to the node; otherwise, if not, when the threshold is reached, send the request;
a receiving module 505 configured to receive request results returned from the addresses of the plurality of nodes;
a verification module 507 configured to verify credibility of the consortium blockchain based on consistency of the request results.

The request includes a service location query request or a simple payment verification SPV request, and the request includes a digest hash of a target service.

Further, the obtaining module 501 randomly obtains a plurality of node addresses in the consortium blockchain; or obtains addresses of a plurality of nodes in the consortium blockchain which include addresses of the connected nodes.

Corresponding to the third aspect, the examples of the present specification also provide an apparatus for processing a request in a consortium blockchain, which is located on a node in the consortium blockchain, generates a service on a client device, and records the service to the blockchain through the connected node, as shown in FIG. 6. FIG. 6 is a schematic block diagram illustrating an apparatus for processing a request according to the examples of the specification, and the apparatus includes:
a receiving module 601 configure to receive a request sent by a client device, where the request includes a service location query request or a simple payment verification SPV request, and the request includes a digest hash of a target service.
an identity determination module 603 configure to determine whether the client device is a user of the current node or a user of another node;
a quantity of processing times determination module 605 configure to, when the client device is a user of another node, determine a first processing quantity of times for which the current node has processed requests from users of another node; and determine a second processing quantity of times for which other nodes have processed requests from users of the current node;
a determination module 607 configure to perform processing on the request based on the first processing quantity of times and the second processing quantity of times, where the processing includes: deferring processing the request sent by the client device, or transferring the request to other nodes for processing.
a sending module 609 configure to, after any node performs processing, send the result to the client device.

Further, the apparatus further includes a whitelist marking module 611, configured to determine a whitelist user of the current node, where the whitelist is used for determining that a user type of the client device is an illegitimate user or a legitimate user, and a legitimate user includes a user of the current node or a user of another node; and sending the whitelist to other nodes in the consortium blockchain, for other nodes to receive and store the whitelist.

Further, the determination module 607 is further configured to determine whether the client device is a legitimate user based on the whitelist when a request is received, and if not, the request is not processed.

Further, the sending module is further configured to randomly transfer the request to one of the other nodes, and one of the other nodes does not include the connected node of the client device.

The examples of the present specification also provide a computer device, which at least includes a memory, a processor, and a computer program stored in the memory and executable on the processor, wherein when the processor executes the program, the processor implements the method for processing a request in a consortium blockchain as shown in FIG. 3.

The examples of the present specification also provide a computer device, which includes at least a memory, a processor, and a computer program stored in the memory and executable on the processor, wherein when the processor executes the program, the processor implements the method for processing a request in a consortium blockchain as shown in FIG. 4.

FIG. 7 shows a more specific hardware structure diagram of a computing device according to some examples of the present specification. The device can include a processor 1010, a memory 1020, an input/output interface 1030, a communication interface 1040, and a bus 1050. The processor 1010, the memory 1020, the input/output interface 1030, and the communication interface 1040 implement communication connection between one another in the device via the bus 1050.

The processor 1010 can be implemented by a general Central Processing Unit (CPU), a microprocessor, an Application Specific Integrated Circuit (ASIC), or one or more integrated circuits, to execute related programs to implement the technical solutions provided in some examples of the present specification.

The memory 1020 can be implemented in the form of Read Only Memory (ROM), Random Access Memory (RAM), a static storage device, a dynamic storage device, or the like. The memory 1020 can store an operating system and other application programs. When the technical solutions provided in some examples of the present specification are implemented by software or firmware, the related program codes are stored in the memory 1020 and invoked and executed by the processor 1010.

The input/output interface 1030 is configured to be connected to input/output modules to implement information input and output. The input/output modules can be configured in the device as components (not shown in the figures), or can be connected externally to a device to provide corresponding functions. Ae input device can include a keyboard, a mouse, a touch screen, a microphone, various sensors, or the like, and an output device can include a display, a speaker, a vibrator, an indicator light, or the like.

The communication interface 1040 is configured to be connected to a communication module (not shown in the figures) to implement communication interaction between the device and other devices. The communication module can implement communication through wired methods (such as USB, network cable, or the like), or through wireless methods (such as mobile network, WIFI, Bluetooth, or the like).

The bus 1050 includes a path to transmit information among various components of the device (for example, the processor 1010, the memory 1020, the input/output interface 1030, and the communication interface 1040).

It should be noted that although the above-mentioned devices only shown the processor 1010, the memory 1020, the input/output interface 1030, the communication interface 1040, and the bus 1050, in the specific implementation process, the device can also include other components required to implement normal operations. In addition, those skilled in the art can understand that the above-mentioned devices can also include only the components necessary to implement the solutions of the examples of the present specification, and not necessarily include all the components shown in the figures.

The examples of the present specification also provide a computer-readable storage medium on which a computer program is stored, and when the program is executed by the processor, the method for verifying credibility of a consortium blockchain shown in FIG. 3 is implemented.

The examples of the present specification also provide another computer-readable storage medium on which a computer program is stored, and when the program is executed by a processor, the method for processing a request in a consortium blockchain shown in FIG. 4 is implemented.

The computer-readable medium includes persistent, non-persistent, removable or non-removable medium, which can store information by any method or technology. Information can be computer-readable instructions, data structures, modules of a program, or other data. Examples of computer storage media include, but are not limited to, a parameter random access memory (PRAM), a static random access memory (SRAM), a dynamic random access memory (DRAM), other types of random access memory (RAM), and a read-only memory (ROM), an electrically erasable programmable read-only memory (EEPROM), a flash memory or other memory technologies, a compact disc read-only memory (CD-ROM), a digital versatile disc (DVD) or other optical storage, a cassette magnetic tape, magnetic disk storage, a quantum memory, graphene-based storage media, or other magnetic storage devices or any other non-transmission media can be used to store information that can be accessed by computing devices. Based on the definition in the present specification, computer-readable media does not include transitory computer-readable media (transitory media), such as modulated data signals and carrier waves.

From the description of the above-mentioned examples, those skilled in the art can clearly understand that the examples of the present specification can be implemented by means of software plus a necessary general hardware platform. Based on this understanding, the technical solutions of the examples of the present specification can be embodied in the form of software products, which can be stored in storage media, such as ROM/RAM, a magnetic disk, an optical disk, etc., include several instructions to make a computer device (which can be a personal computer, a server, or a network device, etc.) to execute the methods described in the various examples or some parts of the examples of the present specification.

The system, apparatus, module, or unit described in the previous examples can be implemented by a computer chip or entity, or can be implemented by using a product with a certain function. A typical implementation device is a computer, and the specific form of the computer can be a personal computer, a laptop computer, a cellular phone, a camera phone, a smart phone, a personal digital assistant, a media player, a navigation device, an email sending and receiving device, a game console, a tablet computer, a wearable device, or a combination of any of these devices.

The various examples in the present specification are described in a progressive manner, and the same or similar parts between the various examples can be referred to each other. Each example focuses on the differences from other examples. In particular, for the method examples, since they are basically similar to the method examples, the description is relatively simple, and the relevant parts can be referred to the part of the description of the method examples. The method examples described above-mentioned are only illustrative. The modules described as separate components can or cannot be physically separated. When implementing the solutions of the examples of the present specification, the functions of the modules can be in the same or multiple software and/or hardware implementations. Some or all of the modules can also be selected according to actual needs to achieve the objectives of the solutions of the examples. Those of ordinary skill in the art can understand and implement it without creative work.

The above-mentioned are only specific implementations of the examples of the present specification. It should be pointed out that for those of ordinary skill in the art, without departing from the principle of the examples of the present specification, some improvements and modifications can be made. Such improvements and modifications should also be regarded as be within the protection scope of the examples of the present specification.

## Claims

1. A system for processing a request in a consortium blockchain, after generating a service on a client device, recording the service on the consortium blockchain through a connected node and receiving, by the client device, a notification message about the consortium blockchain recording the service and including a digest hash of the service, the system comprising:
the client device configured to send (S201) a request to a plurality of nodes in the consortium blockchain to verify credibility of the consortium blockchain, wherein the request comprises a service location query request and/or a simple payment verification, SPV, request, and the request comprises the digest hash of the service to enable determination of a location of the service in the consortium blockchain through the digest hash of the service;
any node configured to receive (S203) the request, wherein the any node is a current node and is further configured to determine whether the client device is a user of the current node or a user of another node;
wherein the current node is further configured to:
in response to determining that the client device is a user of another node, determine (S205) a first processing quantity of times for which the current node has processed requests from users of another node, and a second processing quantity of times for which other nodes have processed requests from users of the current node; and
perform processing (S207) on the request based on the first processing quantity of times and the second processing quantity of times, wherein the processing comprises: deferring processing the request sent by the client device, or transferring the request to other nodes for processing;
wherein the client device is further configured to verify (S209) the credibility of the consortium blockchain that includes information on the service based on consistency of request results returned by the plurality of nodes.

2. The system of claim 1, wherein sending, by the client device, the request to the plurality of nodes in the consortium blockchain comprises:
randomly obtaining, by the client device, addresses of the plurality of nodes in the consortium blockchain, and sending, by the client device, the request to the plurality of nodes in the consortium blockchain; or
obtaining, by the client device, addresses of the plurality of nodes in the consortium blockchain which comprise addresses of connected nodes, and sending, by the client device, the request to the plurality of nodes in the consortium blockchain.

3. The system of claim 1, wherein transferring, by the current node, the request to the other nodes for processing comprises:
randomly transferring the request to one of another node, and the one of another node excludes the connected node of the client device.

4. The system of claim 1, comprising a second node of the consortium blockchain configured to, before the client device sends the request to the plurality of nodes in the consortium blockchain:
determine a whitelist of users, wherein the whitelist is used for determining that a user type of the client device is an illegitimate user or a legitimate user, and a legitimate user comprises a user of the current node or a user of another node; and
send the whitelist to nodes other than the second node in the consortium blockchain for the nodes other than the second node to receive and store the whitelist.

5. The system of claim 4, wherein the current node is further configured to, before determining a first processing quantity of times for which the current node has processed requests from users of another node:
determine whether the client device is a legitimate user based on the whitelist, and, in response to determining that the user is not a legitimate user, to not process the request.

6. The system of claim 1, wherein sending, by the client device, the request to the plurality of nodes in the consortium blockchain comprises:
for any one node of the plurality of nodes, determining, by the client device, whether a quantity of times requests sent to the one node has reached a threshold, and in response to determining that the quantity of times has reached the threshold, deferring, by the client device, sending the request to the one node.

7. The system of claim 1, wherein verifying, by the client device, the credibility of the consortium blockchain that includes the information on the service based on consistency of the request results returned by the plurality of nodes comprises verifying, by the client device, the credibility of the consortium blockchain based on consistency of location query results returned by the plurality of nodes when the request comprises the service location query request and/or based on consistency of SPV verification results returned by the plurality of nodes when the request comprises the SPV request.

8. A computer program comprising instructions which, when the program is executed by a client device, cause the client device to carry out steps for verifying credibility of a consortium blockchain after a service is generated by a user on the client device, the service is recorded on the consortium blockchain through a connected node and a notification message about the consortium blockchain recording the service and including a digest hash of the service is received by the client device, the steps comprising:
obtaining (S301) addresses of a plurality of nodes in the consortium blockchain to send a request to verify credibility of the consortium blockchain;
before sending the request, for any node of the plurality of nodes, determining (S303) whether a quantity of times requests sent to the node has reached a threshold, and in response to determining that the quantity of times has reached the threshold, deferring sending the request to the node;
receiving (S305) request results returned from the addresses of the plurality of nodes; and
verifying (S307) the credibility of the consortium blockchain based on consistency of the request results;
wherein the request comprises a service location query request or a simple payment verification, SPV, request, and the request comprises the digest hash of the service to enable determination of a location of the service in the consortium blockchain through the digest hash of the service.

9. The computer program of claim 8, wherein the obtaining addresses of a plurality of nodes in the consortium blockchain comprises:
randomly obtaining addresses of a plurality of nodes in the consortium blockchain; or,
obtaining addresses of a plurality of nodes in the consortium blockchain which comprise addresses of connected nodes.

10. A method performed by a current node in a consortium blockchain for processing a request in the consortium blockchain after a service is generated by a user on a client device, the service is recorded on the consortium blockchain through a connected node and a notification message about the consortium blockchain recording the service and including a digest hash of the service is received by the client device, the method comprising:
receiving (S401) a request to verify credibility of the consortium blockchain sent by the client device, wherein the current node is a node of a plurality of nodes in the consortium blockchain to which the client device has sent the request, wherein the request comprises a service location query request or a simple payment verification, SPV, request, and the request comprises the digest hash of the service to enable determination of a location of the service in the consortium blockchain through the digest hash of the service;
determining (S403) whether the client device is a user of the current node or a user of another node;
in response to determining that the client device is a user of another node, determining (S405) a first processing quantity of times for which the current node has processed requests from users of another node, and a second processing quantity of times for which other nodes have processed requests from users of the current node; and
performing processing (S407) on the request based on the first processing quantity of times and the second processing quantity of times, wherein the processing comprises: deferring processing the request sent by the client device, or transferring the request to other nodes for processing;
wherein the client device is further configured to verify the credibility of the consortium blockchain that includes information on the service based on consistency of request results returned by the plurality of nodes.

11. The method of claim 10, wherein before the receiving a request to verify credibility of the consortium blockchain sent by the client device, the method further comprises:
determining a whitelist of users, wherein the whitelist is used for determining that a user type of the client device is an illegitimate user or a legitimate user, and a legitimate user comprises a user of the current node or a user of another node; and
sending the whitelist to other nodes in the consortium blockchain for the other nodes to receive and store the whitelist.

12. The method of claim 11, further comprising:
when receiving the request, determining whether the client device is a legitimate user, and, in response to determining that the user is not a legitimate user, not processing the request.

13. The method of claim 10, wherein the transferring the request to other nodes for processing comprises:
randomly transferring the request to one of another node, and the one of another node excludes the connected node of the client device.

14. A computer readable storage medium (1020) on which a computer program comprising instructions is stored, wherein the instructions, when executed by a processor (1010) of a current node in a consortium blockchain, cause the processor (1010) to implement the method of any one of claims 10 to 13.

## Patentansprüche

1. System zum Verarbeiten einer Anforderung in einer Konsortium-Blockchain, nach Erzeugen eines Diensts auf einer Client-Vorrichtung, Aufzeichnen des Diensts auf der Konsortium-Blockchain durch einen verbundenen Knoten und Empfangen, durch die Client-Vorrichtung, einer Benachrichtigungsnachricht über die Konsortium-Blockchain, die den Dienst aufzeichnet und einen Digest-Hash des Diensts aufweist, wobei das System umfasst:
die Client-Vorrichtung, die dazu eingerichtet ist, eine Anforderung an eine Vielzahl von Knoten in der Konsortium-Blockchain zu senden (S201), um die Glaubwürdigkeit der Konsortium-Blockchain zu verifizieren, wobei die Anforderung eine Dienststandortabfrageanforderung und/oder eine einfache Zahlungsverifizierungsanforderung, SPV-Anforderung, umfasst und die Anforderung den Digest-Hash des Diensts umfasst, um eine Bestimmung eines Standorts des Diensts in der Konsortium-Blockchain durch den Digest-Hash des Diensts zu ermöglichen;
einen beliebigen Knoten, der dazu eingerichtet ist, die Anforderung zu empfangen (S203), wobei der beliebige Knoten ein aktueller Knoten ist und ferner dazu eingerichtet ist, zu bestimmen, ob die Client-Vorrichtung ein Benutzer des aktuellen Knotens oder ein Benutzer eines anderen Knotens ist;
wobei der aktuelle Knoten ferner dazu eingerichtet ist:
als Reaktion auf das Bestimmen, dass die Client-Vorrichtung ein Benutzer eines anderen Knotens ist, eine erste Verarbeitungsanzahl von Malen, für die der aktuelle Knoten Anforderungen von Benutzern eines anderen Knotens verarbeitet hat, und eine zweite Verarbeitungsanzahl von Malen, für die andere Knoten Anforderungen von Benutzern des aktuellen Knotens verarbeitet haben, zu bestimmen (S205); und
eine Verarbeitung (S207) auf der Anforderung basierend auf der ersten Verarbeitungsanzahl von Malen und der zweiten Verarbeitungsanzahl von Malen durchzuführen, wobei die Verarbeitung umfasst: Verzögern einer Verarbeitung der von der Client-Vorrichtung gesendeten Anforderung oder Übertragen der Anforderung an andere Knoten zur Verarbeitung;
wobei die Client-Vorrichtung ferner dazu eingerichtet ist, die Glaubwürdigkeit der Konsortium-Blockchain, die Informationen über den Dienst aufweist, basierend auf einer Konsistenz von Anforderungsergebnissen, die von der Vielzahl von Knoten zurückgegeben werden, zu verifizieren (S209).

2. System nach Anspruch 1, wobei das Senden, durch die Client-Vorrichtung, der Anforderung an die Vielzahl von Knoten in der Konsortium-Blockchain umfasst:
zufälliges Erhalten, durch die Client-Vorrichtung, von Adressen der Vielzahl von Knoten in der Konsortium-Blockchain und Senden, durch die Client-Vorrichtung, der Anforderung an die Vielzahl von Knoten in der Konsortium-Blockchain; oder
Erhalten, durch die Client-Vorrichtung, von Adressen der Vielzahl von Knoten in der Konsortium-Blockchain, die Adressen von verbundenen Knoten umfassen, und Senden, durch die Client-Vorrichtung, der Anforderung an die Vielzahl von Knoten in der Konsortium-Blockchain.

3. System nach Anspruch 1, wobei das Übertragen, durch den aktuellen Knoten, der Anforderung an die anderen Knoten zur Verarbeitung umfasst:
zufälliges Übertragen der Anforderung an einen anderen Knoten, und wobei der eine andere Knoten den verbundenen Knoten der Client-Vorrichtung ausschließt.

4. System nach Anspruch 1, umfassend einen zweiten Knoten der Konsortium-Blockchain, der dazu eingerichtet ist, bevor die Client-Vorrichtung die Anforderung an die Vielzahl von Knoten in der Konsortium-Blockchain sendet:
eine Whitelist von Benutzern zu bestimmen, wobei die Whitelist zum Bestimmen verwendet wird, dass ein Benutzertyp der Client-Vorrichtung ein unberechtigter Benutzer oder ein berechtigter Benutzer ist, und wobei ein berechtigter Benutzer einen Benutzer des aktuellen Knotens oder einen Benutzer eines anderen Knotens umfasst; und
die Whitelist an andere Knoten als den zweiten Knoten in der Konsortium-Blockchain zu senden, damit die anderen Knoten als der zweite Knoten die Whitelist empfangen und speichern können.

5. System nach Anspruch 4, wobei der aktuelle Knoten ferner dazu eingerichtet ist, vor dem Bestimmen einer ersten Verarbeitungsanzahl von Malen, für die der aktuelle Knoten Anforderungen von Benutzern eines anderen Knotens verarbeitet hat:
basierend auf der Whitelist zu bestimmen, ob die Client-Vorrichtung ein berechtigter Benutzer ist, und als Reaktion auf das Bestimmen, dass der Benutzer kein berechtigter Benutzer ist, die Anforderung nicht zu verarbeiten.

6. System nach Anspruch 1, wobei das Senden, durch die Client-Vorrichtung, der Anforderung an die Vielzahl von Knoten in der Konsortium-Blockchain umfasst:
für einen beliebigen Knoten der Vielzahl von Knoten, Bestimmen, durch die Client-Vorrichtung, ob eine Anzahl von Malen von an den einen Knoten gesendeten Anforderungen einen Schwellenwert erreicht hat, und als Reaktion auf das Bestimmen, dass die Anzahl von Malen den Schwellenwert erreicht hat, Verzögern, durch die Client-Vorrichtung, des Sendens der Anforderung an den einen Knoten.

7. System nach Anspruch 1, wobei das Verifizieren, durch die Client-Vorrichtung, der Glaubwürdigkeit der Konsortium-Blockchain, die die Informationen über den Dienst aufweist, basierend auf einer Konsistenz der Anforderungsergebnisse, die von der Vielzahl von Knoten zurückgegeben werden, ein Verifizieren, durch die Client-Vorrichtung, der Glaubwürdigkeit der Konsortium-Blockchain basierend auf einer Konsistenz von Standortabfrageergebnissen, die von der Vielzahl von Knoten zurückgegeben werden, wenn die Anforderung die Dienststandortabfrageanforderung umfasst, und/oder basierend auf einer Konsistenz von SPV-Verifizierungsergebnissen umfasst, die von der Vielzahl von Knoten zurückgegeben werden, wenn die Anforderung die SPV-Anforderung umfasst.

8. Computerprogramm, umfassend Befehle, die, wenn das Programm von einer Client-Vorrichtung ausgeführt wird, die Client-Vorrichtung dazu veranlassen, Schritte zum Verifizieren einer Glaubwürdigkeit einer Konsortium-Blockchain auszuführen, nachdem ein Dienst von einem Benutzer auf der Client-Vorrichtung erzeugt wurde, wobei der Dienst auf der Konsortium-Blockchain durch einen verbundenen Knoten aufgezeichnet wird und eine Benachrichtigungsnachricht über die Konsortium-Blockchain, die den Dienst aufzeichnet und einen Digest-Hash des Diensts aufweist, von der Client-Vorrichtung empfangen wird, wobei die Schritte umfassen:
Erhalten (S301) von Adressen einer Vielzahl von Knoten in der Konsortium-Blockchain, um eine Anforderung zum Verifizieren einer Glaubwürdigkeit der Konsortium-Blockchain zu senden;
vor dem Senden der Anforderung, für einen beliebigen Knoten der Vielzahl von Knoten, Bestimmen (S303), ob eine Anzahl von Malen von an den Knoten gesendeten Anforderungen einen Schwellenwert erreicht hat, und als Reaktion auf das Bestimmen, dass die Anzahl von Malen den Schwellenwert erreicht hat, Verzögern des Sendens der Anforderung an den Knoten;
Empfangen (S305) von Anforderungsergebnissen, die von den Adressen der Vielzahl von Knoten zurückgegeben werden; und
Verifizieren (S307) der Glaubwürdigkeit der Konsortium-Blockchain basierend auf einer Konsistenz der Anforderungsergebnisse;
wobei die Anforderung eine Dienststandortabfrageanforderung oder eine einfache Zahlungsverifizierungsanforderung, SPV-Anforderung, umfasst und die Anforderung den Digest-Hash des Diensts umfasst, um eine Bestimmung eines Standorts des Diensts in der Konsortium-Blockchain durch den Digest-Hash des Diensts zu ermöglichen.

9. Computerprogramm nach Anspruch 8, wobei das Erhalten von Adressen einer Vielzahl von Knoten in der Konsortium-Blockchain umfasst:
zufälliges Erhalten von Adressen einer Vielzahl von Knoten in der Konsortium-Blockchain; oder
Erhalten von Adressen einer Vielzahl von Knoten in der Konsortium-Blockchain, die Adressen von verbundenen Knoten umfassen.

10. Verfahren, das von einem aktuellen Knoten in einer Konsortium-Blockchain durchgeführt wird, zum Verarbeiten einer Anforderung in der Konsortium-Blockchain, nachdem ein Dienst von einem Benutzer auf einer Client-Vorrichtung erzeugt wurde, wobei der Dienst auf der Konsortium-Blockchain durch einen verbundenen Knoten aufgezeichnet wird und eine Benachrichtigungsnachricht über die Konsortium-Blockchain, die den Dienst aufzeichnet und einen Digest-Hash des Diensts aufweist, von der Client-Vorrichtung empfangen wird, wobei das Verfahren umfasst:
Empfangen (S401) einer Anforderung zum Verifizieren der Glaubwürdigkeit der Konsortium-Blockchain, die von der Client-Vorrichtung gesendet wird, wobei der aktuelle Knoten ein Knoten einer Vielzahl von Knoten in der Konsortium-Blockchain ist, an den die Client-Vorrichtung die Anforderung gesendet hat, wobei die Anforderung eine Dienststandortabfrageanforderung oder eine einfache Zahlungsverifizierungsanforderung, SPV-Anforderung, umfasst und die Anforderung den Digest-Hash des Diensts umfasst, um eine Bestimmung eines Standorts des Diensts in der Konsortium-Blockchain durch den Digest-Hash des Diensts zu ermöglichen;
Bestimmen (S403), ob die Client-Vorrichtung ein Benutzer des aktuellen Knotens oder ein Benutzer eines anderen Knotens ist;
als Reaktion auf das Bestimmen, dass die Client-Vorrichtung ein Benutzer eines anderen Knotens ist, Bestimmen (S405) einer ersten Verarbeitungsanzahl von Malen, für die der aktuelle Knoten Anforderungen von Benutzern eines anderen Knotens verarbeitet hat, und einer zweiten Verarbeitungsanzahl von Malen, für die andere Knoten Anforderungen von Benutzern des aktuellen Knotens verarbeitet haben; und
Durchführen einer Verarbeitung (S407) auf der Anforderung basierend auf der ersten Verarbeitungsanzahl von Malen und der zweiten Verarbeitungsanzahl von Malen, wobei die Verarbeitung umfasst: Verzögern einer Verarbeitung der von der Client-Vorrichtung gesendeten Anforderung oder Übertragen der Anforderung an andere Knoten zur Verarbeitung;
wobei die Client-Vorrichtung ferner dazu eingerichtet ist, die Glaubwürdigkeit der Konsortium-Blockchain, die Informationen über den Dienst aufweist, basierend auf einer Konsistenz von Anforderungsergebnissen, die von der Vielzahl von Knoten zurückgegeben werden, zu verifizieren.

11. Verfahren nach Anspruch 10, wobei das Verfahren vor dem Empfangen einer Anforderung zum Verifizieren einer Glaubwürdigkeit der Konsortium-Blockchain, die von der Client-Vorrichtung gesendet wird, ferner umfasst:
Bestimmen einer Whitelist von Benutzern, wobei die Whitelist zum Bestimmen verwendet wird, dass ein Benutzertyp der Client-Vorrichtung ein unberechtigter Benutzer oder ein berechtigter Benutzer ist, und wobei ein berechtigter Benutzer einen Benutzer des aktuellen Knotens oder einen Benutzer eines anderen Knotens umfasst; und
Senden der Whitelist an andere Knoten in der Konsortium-Blockchain, damit die anderen Knoten die Whitelist empfangen und speichern können.

12. Verfahren nach Anspruch 11, ferner umfassend:
beim Empfangen der Anforderung, Bestimmen, ob die Client-Vorrichtung ein berechtigter Benutzer ist, und als Reaktion auf das Bestimmen, dass der Benutzer kein berechtigter Benutzer ist, Nichtverarbeiten der Anforderung.

13. Verfahren nach Anspruch 10, wobei das Übertragen der Anforderung an andere Knoten zur Verarbeitung umfasst:
zufälliges Übertragen der Anforderung an einen anderen Knoten, und wobei der eine andere Knoten den verbundenen Knoten der Client-Vorrichtung ausschließt.

14. Computerlesbares Speichermedium (1020), auf dem ein Computerprogramm gespeichert ist, das Befehle umfasst, wobei die Befehle, wenn sie von einem Prozessor (1010) eines aktuellen Knotens in einer Konsortium-Blockchain ausgeführt werden, den Prozessor (1010) dazu veranlassen, das Verfahren nach einem der Ansprüche 10 bis 13 zu implementieren.

## Revendications

1. Système de traitement d'une demande dans une chaîne de blocs de consortium, après la génération d'un service sur un dispositif client, l'enregistrement du service sur la chaîne de blocs de consortium par l'intermédiaire d'un noeud connecté et la réception, par le dispositif client, d'un message de notification concernant la chaîne de blocs de consortium enregistrant le service et incluant un hachage de résumé du service, le système comprenant :
le dispositif client configuré pour envoyer (S201) une demande à une pluralité de noeuds dans la chaîne de blocs de consortium pour vérifier la crédibilité de la chaîne de blocs de consortium, dans lequel la demande comprend une demande d'interrogation d'emplacement de service et/ou une demande de vérification de paiement simple, SPV, et la demande comprend le hachage de résumé du service pour permettre la détermination d'un emplacement du service dans la chaîne de blocs de consortium par l'intermédiaire du hachage de résumé du service ;
un noeud quelconque configuré pour recevoir (S203) la demande, dans lequel le noeud quelconque est un noeud courant et est en outre configuré pour déterminer si le dispositif client est un utilisateur du noeud courant ou un utilisateur d'un autre noeud ;
dans lequel le noeud courant est en outre configuré pour :
en réponse à la détermination que le dispositif client est un utilisateur d'un autre noeud, déterminer (S205) une première quantité de fois de traitement que le noeud courant a traité des demandes provenant d'utilisateurs d'un autre noeud, et une seconde quantité de fois de traitement que d'autres noeuds ont traité des demandes provenant d'utilisateurs du noeud courant ; et
effectuer un traitement (S207) sur la demande sur la base de la première quantité de fois de traitement et de la seconde quantité de fois de traitement, dans lequel le traitement comprend : le report du traitement de la demande envoyée par le dispositif client, ou le transfert de la demande à d'autres noeuds pour traitement ;
dans lequel le dispositif client est en outre configuré pour vérifier (S209) la crédibilité de la chaîne de blocs de consortium qui comprend des informations sur le service sur la base de la cohérence de résultats de demande renvoyés par la pluralité de noeuds.

2. Système selon la revendication 1, dans lequel l'envoi, par le dispositif client, de la demande à la pluralité de noeuds dans la chaîne de blocs de consortium comprend :
l'obtention aléatoire, par le dispositif client, d'adresses de la pluralité de noeuds dans la chaîne de blocs de consortium, et l'envoi, par le dispositif client, de la demande à la pluralité de noeuds dans la chaîne de blocs de consortium ; ou
l'obtention, par le dispositif client, d'adresses de la pluralité de noeuds dans la chaîne de blocs de consortium qui comprennent des adresses de noeuds connectés, et l'envoi, par le dispositif client, de la demande à la pluralité de noeuds dans la chaîne de blocs de consortium.

3. Système selon la revendication 1, dans lequel le transfert, par le noeud courant, de la demande aux autres noeuds pour traitement comprend :
le transfert aléatoire de la demande à l'un d'un autre noeud, et l'un d'un autre noeud exclut le noeud connecté du dispositif client.

4. Système selon la revendication 1, comprenant un second noeud de la chaîne de blocs de consortium configuré pour, avant que le dispositif client n'envoie la demande à la pluralité de noeuds dans la chaîne de blocs de consortium :
déterminer une liste blanche d'utilisateurs, dans lequel la liste blanche est utilisée pour déterminer qu'un type d'utilisateur du dispositif client est un utilisateur illégitime ou un utilisateur légitime, et un utilisateur légitime comprend un utilisateur du noeud courant ou un utilisateur d'un autre noeud ; et
envoyer la liste blanche à des noeuds autres que le second noeud dans la chaîne de blocs de consortium pour que les noeuds autres que le second noeud reçoivent et stockent la liste blanche.

5. Système selon la revendication 4, dans lequel le noeud courant est en outre configuré pour, avant de déterminer une première quantité de fois de traitement que le noeud courant a traité des demandes provenant d'utilisateurs d'un autre noeud :
déterminer si le dispositif client est un utilisateur légitime sur la base de la liste blanche, et, en réponse à la détermination que l'utilisateur n'est pas un utilisateur légitime, ne pas traiter la demande.

6. Système selon la revendication 1, dans lequel l'envoi, par le dispositif client, de la demande à la pluralité de noeuds dans la chaîne de blocs de consortium comprend :
pour un noeud quelconque de la pluralité de noeuds, la détermination, par le dispositif client, si une quantité de fois de demandes envoyées au noeud a atteint un seuil, et en réponse à la détermination que la quantité de fois a atteint le seuil, le report, par le dispositif client, de l'envoi de la demande au noeud.

7. Système selon la revendication 1, dans lequel la vérification, par le dispositif client, de la crédibilité de la chaîne de blocs de consortium qui comprend les informations sur le service sur la base de la cohérence des résultats de demande renvoyés par la pluralité de noeuds comprend la vérification, par le dispositif client, de la crédibilité de la chaîne de blocs de consortium sur la base de la cohérence de résultats d'interrogation d'emplacement renvoyés par la pluralité de noeuds lorsque la demande comprend la demande d'interrogation d'emplacement de service et/ou sur la base de la cohérence de résultats de vérification SPV renvoyés par la pluralité de noeuds lorsque la demande comprend la demande SPV.

8. Programme informatique comprenant des instructions qui, lorsque le programme est exécuté par un dispositif client, amènent le dispositif client à effectuer des étapes de vérification de la crédibilité d'une chaîne de blocs de consortium après qu'un service est généré par un utilisateur sur le dispositif client, le service est enregistré sur la chaîne de blocs de consortium par l'intermédiaire d'un noeud connecté et un message de notification concernant la chaîne de blocs de consortium enregistrant le service et incluant un hachage de résumé du service est reçu par le dispositif client, les étapes comprenant :
l'obtention (S301) d'adresses d'une pluralité de noeuds dans la chaîne de blocs de consortium pour envoyer une demande de vérification de la crédibilité de la chaîne de blocs de consortium ;
avant l'envoi de la demande, pour un noeud quelconque de la pluralité de noeuds, la détermination (S303) si une quantité de fois de demandes envoyées au noeud a atteint un seuil, et en réponse à la détermination que la quantité de fois a atteint le seuil, le report de l'envoi de la demande au noeud ;
la réception (S305) de résultats de demande renvoyés à partir des adresses de la pluralité de noeuds ; et
la vérification (S307) de la crédibilité de la chaîne de blocs de consortium sur la base de la cohérence des résultats de demande ;
dans lequel la demande comprend une demande d'interrogation d'emplacement de service ou une demande de vérification de paiement simple, SPV, et la demande comprend le hachage de résumé du service pour permettre la détermination d'un emplacement du service dans la chaîne de blocs de consortium par l'intermédiaire du hachage de résumé du service.

9. Programme informatique selon la revendication 8, dans lequel l'obtention d'adresses d'une pluralité de noeuds dans la chaîne de blocs de consortium comprend :
l'obtention aléatoire d'adresses d'une pluralité de noeuds dans la chaîne de blocs de consortium ; ou
l'obtention d'adresses d'une pluralité de noeuds dans la chaîne de blocs de consortium qui comprennent des adresses de noeuds connectés.

10. Procédé réalisé par un noeud courant dans une chaîne de blocs de consortium pour traiter une demande dans la chaîne de blocs de consortium après qu'un service est généré par un utilisateur sur un dispositif client, le service est enregistré sur la chaîne de blocs de consortium par l'intermédiaire d'un noeud connecté et un message de notification concernant la chaîne de blocs de consortium enregistrant le service et incluant un hachage de résumé du service est reçu par le dispositif client, le procédé comprenant :
la réception (S401) d'une demande pour vérifier la crédibilité de la chaîne de blocs de consortium envoyée par le dispositif client, dans lequel le noeud courant est un noeud d'une pluralité de noeuds dans la chaîne de blocs de consortium auquel le dispositif client a envoyé la demande, dans lequel la demande comprend une demande d'interrogation d'emplacement de service ou une demande de vérification de paiement simple, SPV, et la demande comprend le hachage de résumé du service pour permettre la détermination d'un emplacement du service dans la chaîne de blocs de consortium par l'intermédiaire du hachage de résumé du service ;
la détermination (S403) si le dispositif client est un utilisateur du noeud courant ou un utilisateur d'un autre noeud ;
en réponse à la détermination que le dispositif client est un utilisateur d'un autre noeud, la détermination (S405) d'une première quantité de fois de traitement que le noeud courant a traité des demandes provenant d'utilisateurs d'un autre noeud, et une seconde quantité de fois de traitement que d'autres noeuds ont traité des demandes provenant d'utilisateurs du noeud courant ; et
l'accomplissement d'un traitement (S407) sur la demande sur la base de la première quantité de fois de traitement et de la seconde quantité de fois de traitement, dans lequel le traitement comprend : le report du traitement de la demande envoyée par le dispositif client, ou le transfert de la demande à d'autres noeuds pour traitement ;
dans lequel le dispositif client est en outre configuré pour vérifier la crédibilité de la chaîne de blocs de consortium qui comprend des informations sur le service sur la base de la cohérence de résultats de demande renvoyés par la pluralité de noeuds.

11. Procédé selon la revendication 10, dans lequel avant la réception d'une demande pour vérifier la crédibilité de la chaîne de blocs de consortium envoyée par le dispositif client, le procédé comprend en outre :
la détermination d'une liste blanche d'utilisateurs, dans lequel la liste blanche est utilisée pour déterminer qu'un type d'utilisateur du dispositif client est un utilisateur illégitime ou un utilisateur légitime, et un utilisateur légitime comprend un utilisateur du noeud courant ou un utilisateur d'un autre noeud ; et
l'envoi de la liste blanche à d'autres noeuds dans la chaîne de blocs de consortium pour que les autres noeuds reçoivent et stockent la liste blanche.

12. Procédé selon la revendication 11, comprenant en outre :
lors de la réception de la demande, la détermination si le dispositif client est un utilisateur légitime, et, en réponse à la détermination que l'utilisateur n'est pas un utilisateur légitime, le non-traitement de la demande.

13. Procédé selon la revendication 10, dans lequel le transfert de la demande à d'autres noeuds pour traitement comprend :
le transfert aléatoire de la demande à l'un d'un autre noeud, et l'un d'un autre noeud exclut le noeud connecté du dispositif client.

14. Support de stockage lisible par ordinateur (1020) sur lequel un programme informatique comprenant des instructions est stocké, dans lequel les instructions, lorsqu'elles sont exécutées par un processeur (1010) d'un noeud courant dans une chaîne de blocs de consortium, amènent le processeur (1010) à mettre en oeuvre le procédé selon l'une quelconque des revendications 10 à 13.
